# EUROPEAN PATENT SPECIFICATION

(11) **EP 0 822 340 B1**
(45) Date of publication and mention of the grant of the patent: **18.04.2001**
(21) Application number: 97305640.1
(22) Date of filing: 28.07.1997
(51) Int. Cl.: F15B 13/00, F16K 27/00

(54) **Pilot selector valve**
Vorgesteuertes Wahlventil
Soupape sélectrice pilotée

(30) Priority: 29.07.1996 JP 21617596
(43) Date of publication of application: 04.02.1998
(73) Proprietor: SMC CORPORATION, Minato-ku Tokyo 105 (JP)
(72) Inventor: Hayashi, Bunya, c/o SMC Corp., Yawara-mura, Tsukuba-gun, Ibaraki (JP); Ishikawa, Makoto, c/o SMC Corp., Yawara-mura, Tsukuba-gun, Ibaraki (JP)
(74) Representative: Findlay, Alice Rosemary

(56) References cited:
- EP-A- 0 628 729
- EP-A- 0 661 484
- EP-A- 0 703 391
- EP-A- 0 719 949
- US-A- 5 111 840
- PATENT ABSTRACTS OF JAPAN vol. 018, no. 393 (M-1643), 22 July 1994 & JP 06 109156 A (SMC CORP), 19 April 1994,

## Description

The present invention relates to a pilot selector valve.

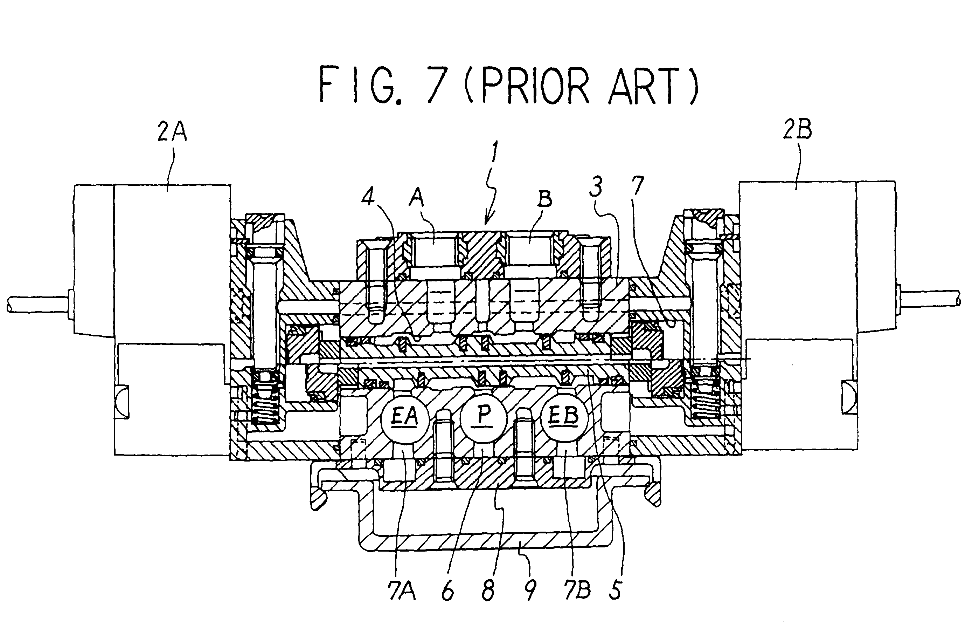

The connection of a large number of pilot selector valves on rails is disclosed in, for example, Japanese Patent Application Laid Open No. 8-93941. Such a selector valve consists of a main valve 1 with a valve member 5 inserted into a valve hole 4 in a valve body 3; and two pilot solenoid valves 2A and 2B attached to both ends of the main valve for outputting a pilot fluid used to drive the valve member 5, as shown in Figure 7. The main valve 1 includes a pressurized fluid supply channel P and ejection channels EA and EB that extend through the main valve in the direction in which valve bodies 3 are connected together; and first and second output ports A and B opening directly on to the top surface of the main body 3, with the supply and ejection channels P, EA, and EB and the two output ports A and B in communication with the valve hole 4. Through holes 6, 7A and 7B are die-formed so that they extend from the bottom surface of the valve body 3 through the supply and ejection channels P, EA, and EB to the valve hole 4 and are closed by a bottom cap 8, which allows the main valve 1 to be directly connected to a rail 9. Such a construction is effective in simplifying the channels while enabling them to have large cross sections in the valve body 3 and in reducing the size of the overall configuration.

Conventional generally known pilot selector valves used to mount manifolds include a pair of output ports extending through channels in a manifold and opened below a pilot selector valve mounting position. Even a pilot selector valve such as that shown in Figure 7, however, preferably includes a pair of output ports opened in the same direction as that of the pilot selector valve used to mount manifolds, that is, at one end surface of the main body 3 in the direction in which the valve hold 4 is opened, so as to be appropriately connected to fluid pressure equipment.

Japanese Patent Application Laid Open No. 6-109156 discloses a pilot selector valve that meets such requirements, and having all the features of the preamble of claim 1. Two solenoid valves are disposed on one end surface of the main body in the direction in which the valve hole is opened, while a pair of output ports opened at the top surface of the valve body extend to the other end surface of the valve body via a piping adapter.

To output pressurized fluid from the pair of output ports opened at the top surface of the valve body, however, such a pilot selector valve requires an installation space on the valve body that is used for the piping adapter, and that is as large as that required for direct piping and connection to the output ports, thereby preventing the size of the main body from being reduced.

In addition, when a pair of output ports are formed at one end surface of the valve body in the direction in which the valve hole is opened while channels extending from the output opening of the valve hole to the output ports are opened by connecting holes together through machining, it is necessary to avoid interference not only with the supply and the ejection channels (P, EA, and EB in Figure 7) penetrating the main valve in the direction in which valve bodies are connected but also with the channel carrying the pilot fluid. Thus, it is very difficult to open channels reaching the output ports, without narrowing the cross-section area of the channels (the diameters of the holes) and thus reducing flow therein. As a result, the size of the valve body must be increased to increase the cross sections and the flow.

It is an object of this invention to provide a pilot selector valve comprising two pilot valves provided at one end surface of a main body in the direction in which a valve hole is opened; and a pair of output ports opened at the opposite end surface of the valve body, which enables an output passage extending from the output opening of the valve hole to the output ports and a pilot fluid channel to be routed easily, particularly, so as to bypass the other channels, and which allows the channels to have a large cross section, while permitting a compact structure, in order to prevent the flow from being substantially less than that of the conventional example shown in Figure 7.

This invention provides a pilot selector valve comprising of a main valve with a valve member inserted into a valve hole in a valve body, the main valve being connected to other such valves on a connecting surface parallel to the axis of the valve hole; and a single pilot valve or two pilot valves for driving and returning which are attached to one end of the valve body in the direction in which the valve hole is opened, said main valve allowing supply and ejection openings for pressurized fluid that open into the valve hole to communicate with supply and ejection channels that penetrate the valve body in the direction in which valve bodies are connected and allowing first and second output openings that open into the valve hole to communicate with output ports opened at the other end of the valve body in the direction in which the valve hole is opened so as to use a pilot fluid output from the pilot valve to drive the valve body of the main valve to switch the first and second output ports between the supply and the ejection channels for communication, wherein the first output opening in the valve body on the pilot valve mounting side is opened relative to a first output channel formed on the top surface of the valve body using a first enlarged channel with a square cross section and with its width in the axial direction of the valve hole sufficiently increased between sealants located on both sides of the output opening or with its width orthogonal to the connecting surface of the valve body made larger than its width in the axial direction of the valve hole, wherein a through hole for allowing the first output channel to communicate with the first output port is opened in the valve body so that the first output channel formed by attaching a top cover to the valve body can be used to allow the first enlarged channel to communicate with the through hole, wherein the second output opening located opposite the first output channel is opened relative to the bottom surface of the valve body using a second enlarged channel similar to the first enlarged channel, and wherein a through hole for allowing the second enlarged channel to communicate with a second output port is opened in the valve body with the opening end of the second enlarged channel closed by a bottom cover attached to the bottom surface of the valve body.

In this pilot selector valve, at the top surface of valve body, a pilot output through hole through which pilot fluid output from a second pilot valve is introduced can be formed relative to a second pilot output channel formed in parallel to the first output channel by attaching the top cover, and a pilot output through hole can be opened to allow the second pilot output channel to communicate with a piston chamber at the end of the valve body located opposite the pilot valve mounting side of the valve body.

In addition, a pilot supply channel that penetrates the valve body in the direction in which valve bodies are connected can be formed to supply pilot fluid to the pilot valve, or an engagement section can be installed on the bottom cover to engage the valve body with a rail to make connections.

In the pilot selector valve the first output opening on the pilot valve mounting side of the valve body is opened relative to the first output channel formed on the top surface of the valve body using the first enlarged channel with a square cross section formed so as to be as large as possible and preferably with a width orthogonal to the connecting surface of the valve body larger than the width in the axial direction, the first output channel is in communication with the first output port channel via the through hole, the top surface of the first output channel is closed by the top cover, and the second output opening is in communication with the second output port via a similar enlarged channel. Thus, although the pilot selector valve is small and includes supply and ejection channels that penetrate the valve body in the direction in which pilot selector valves are connected; and a pair of output ports opened at one end of the valve body in the direction in which the valve hole is opened, it enables the output passage extending from the output opening of the valve hole to the output ports to be routed easily, and allows the channels to have a large cross section while permitting a compact structure in order to prevent the flow from being substantially less than that of conventional examples. This is true of the channel for allowing pilot fluid output from the second pilot valve in the valve body to communicate with the piston chamber located opposite the pilot valve mounting side of the valve body.

The invention will now be described by way of and with reference to the accompanying drawings in which:

Figure 1 is a vertical cross-sectional side view of a first embodiment of this invention.

Figure 2 is an exploded three-dimensional view of Figure 1.

Figure 3 is a three-dimensional view showing an aspect of this invention in which a large number of pilot selector valves are connected according to the first embodiment.

Figure 4 is a cross-sectional view of the integral part of the first embodiment.

Figure 5 describes the passage of fluid according to the first embodiment.

Figure 6 is a vertical cross-sectional side view of a second embodiment.

Figure 7 is a vertical cross-sectional side view of a publicly known selector valve.

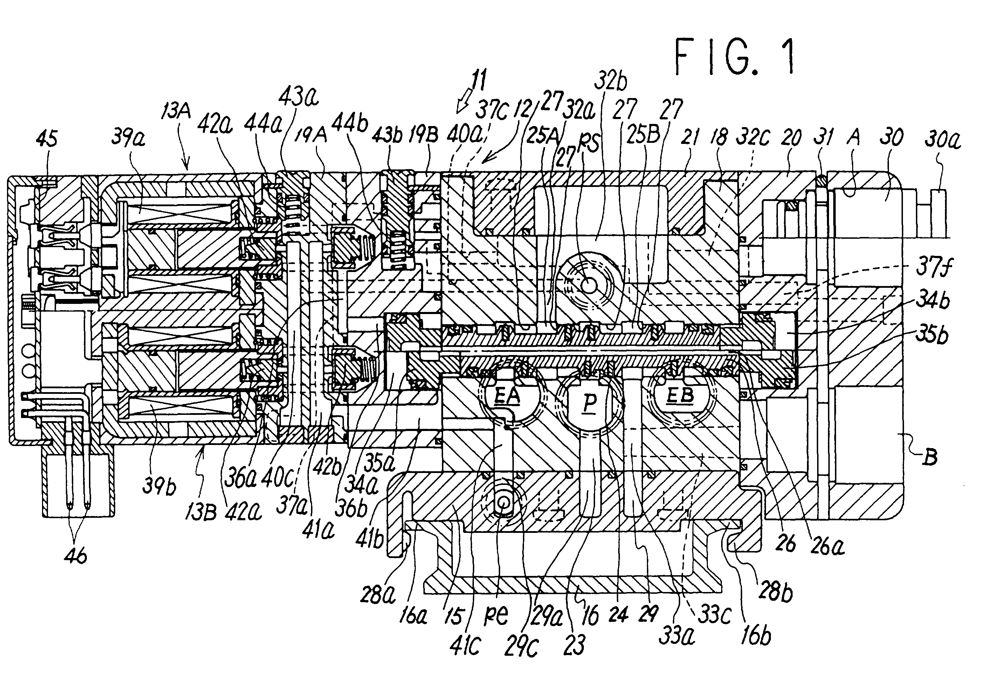

Figures 1 to 5 show a first embodiment wherein a selector valve 11 is configured as a double pilot selector valve that includes a main valve 12 and two pilot solenoid valves 13A and 13B and wherein selector valves 11 can be connected on DIN (German Standard) rails 16 using a bottom cover 15.

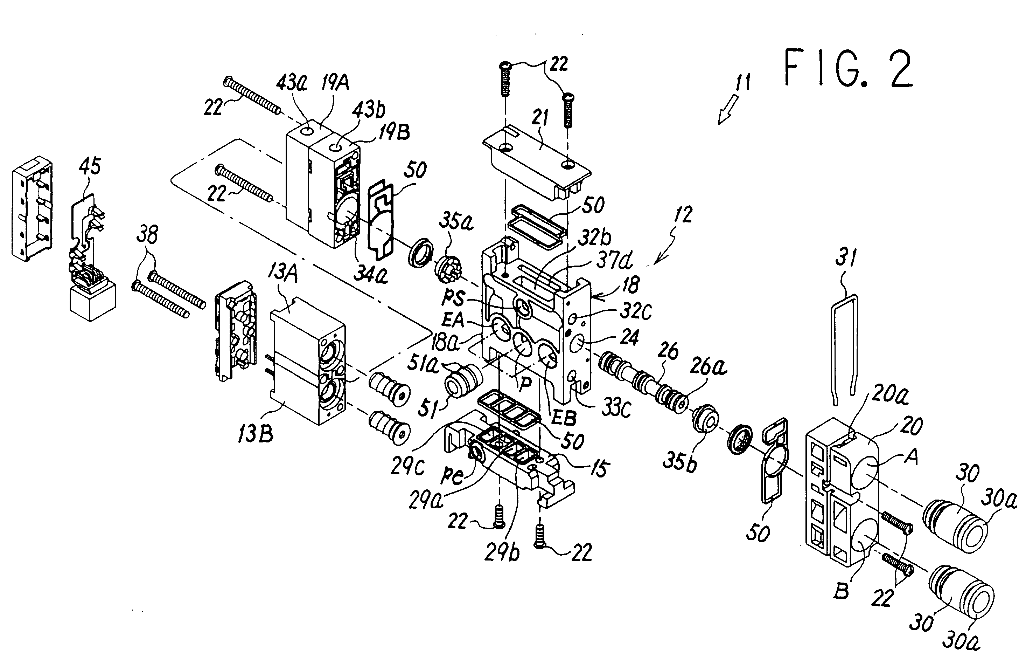

A valve body 18 in the main valve 12 has a valve hole 24 opened therein into which a valve member is inserted, and a plurality of valve bodies 18 can be sequentially connected on a connecting surface 18a parallel to the axis of the valve hole 24. First and second manual operation boxes 19A and 19B are attached to one end of the surface of the valve body in the direction in which the valve hole 24 is opened, an end plate 20 is attached to the other end, a top cover 21 is attached to the top surface, and the bottom cover 15 is attached to the bottom surface, using set screws 22 (see Figure 2) in each case.

The valve body 18 includes a compressed-air supply channel P, first and second ejection channels EA and EB, and a pilot supply channel ps, all of which penetrate the valve body 18 in the direction in which pilot solenoid valves are connected together; and pressurized fluid supply and ejection openings opened into the valve hole 24. The supply channel P is in communication with the supply opening for the valve hole 24 via a supply through hole 23 that is die-formed so as to extend from the bottom surface of the valve body 18 through the valve body to the valve hole 24, and the ejection channels EA and EB are directly in communication with the ejection opening for the valve hole 24. In addition, first and second output openings 25A and 25B are formed between these openings opened into the valve hole 24. The valve member 26 inserted into the valve hole 24 in a sliding manner, uses pilot fluid to switch the first and second output openings 25A and 25B between the supply and the ejection channels P, EA, and EB for communication.

The ejection channels EA and EB can also be opened into the valve hole 24 using a through hole similar to the supply through hole 23, which is die-formed so as to extend from the bottom surface of the valve body 18 through the valve body to the valve hole 24.

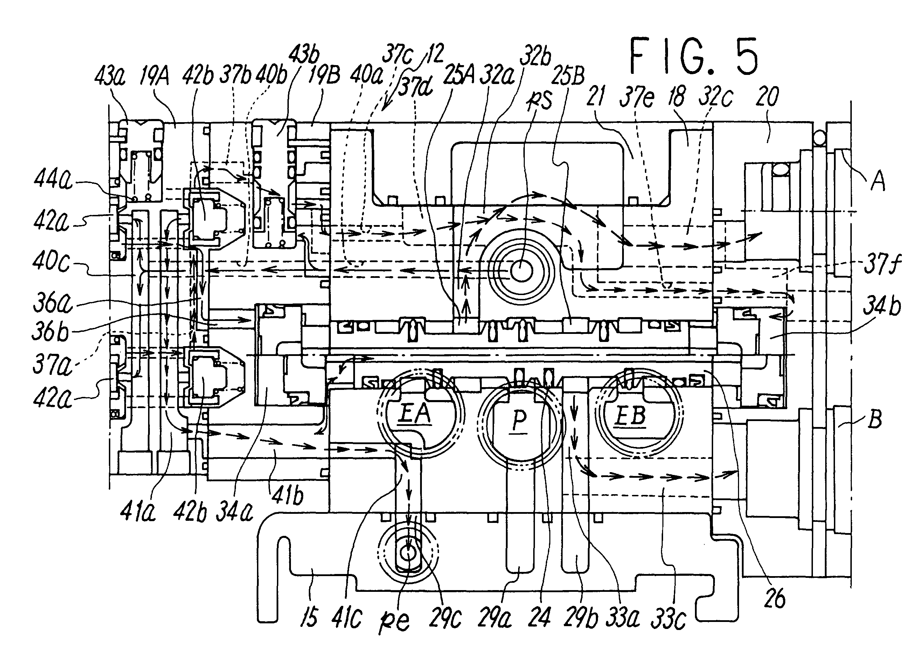

First and second output ports A and B are vertically arranged in the outer surface of an end plate 20 attached to the valve body 18 in such a way that the first and the second output openings 25A and 25B opened into the valve hole 24 are in communication with the output ports A and B. This communication is based on the channeling shown in Figure 5.

First, the first output opening 25A in the valve body 18 on the pilot valve mounting side is opened relative to a first output channel 32b, which is formed by attaching the top cover 21 to a recess in the top surface of the valve body 18, using a first enlarged channel 32a with a square cross section and with its width in the axial direction of the valve hole 24 sufficiently increased between sealants 27, 27 located on both sides of the output opening 25A or preferably with its width orthogonal to the connecting surface 18a of the valve body 18 made larger than its width in the axial direction of the valve hole 24. In addition, a through hole 32c that allows the first output channel 32b to communicate with the first output port A is opened in the valve body 18. Thus, pressurized fluid (compressed air) from the first output opening 25A is output from the first enlarged channel 32a through the first output channel 32b, while the through hole 32c is in communication with the first output port A.

On the other hand, the second output opening 25B located opposite the first output channel is opened relative to the bottom surface of the valve body 18 using a second enlarged channel 33a similar to the first enlarged channel 32a, which has a square cross section, and which has its width in the axial direction of the valve hole 24 sufficiently increased between sealants 27, 27 located on both sides of the output opening 25B or preferably its width orthogonal to the connecting surface 18a of the valve body 18 made larger than its width in the axial direction of the valve hole 24. A through hole 33c that allows the second enlarged channel 33a to communicate with a second output port B is opened in the valve body 18 with the opening end of the second enlarged channel 33a closed by a bottom cover 15 that is attached to the bottom surface of the valve body 18. Thus, pressurized fluid from the second output opening 25B is output from the second enlarged channel 33a through the through hole 33c to the second output port B.

The valve body 18 is formed of a die-cast aluminum alloy or a synthetic resin, and in this case, since the first and the second enlarged channels 32a and 33a are die-formed from above and below the valve body 18, a hole with a relatively large square cross section can be formed easily without the need for a drill to provide round holes. Furthermore, the enlarged channels can be formed easily so that the widths in the axial direction of the valve hole is sufficiently increased between sealants 27, 27 located on both sides of the first and the second output opening 25A and 25B in the valve hole 24 and so that its width orthogonal to the connecting surface 18a of the valve body 18 is made larger than its width in the axial direction of the valve hole 24. Furthermore, a bypass channel can be formed easily. In addition, the top and the bottom covers 21 and 15 are preferably formed of a synthetic resin.

A well known pipe joint 30 that is engaged with a flexible tube (not shown) when it is inserted, and that is disengaged from the tube to allow it to be removed when a release bush 30a is pressed is detachably mounted in the output ports A and B using a U-shaped fastener 31 that is inserted into a mounting groove 20a (see Figure 2) formed on the outer circumference of the end plate 20.

The rail 16 on which the valve body 18 is mounted using the bottom cover 15 is like a cross-sectional channel, and it includes flanges 16a and 16b integrally formed in the width direction on both sides of the rail and with which engagement sections 28a and 28b of the bottom cover 15 are engaged.

The bottom cover 15 includes engagement sections 28a and 28b that elastically engage the flanges 16a and 16b of the rail 16; recesses (seal sections) 29a and 29b that close the supply through hole 23 and the second enlarged channel 33a, respectively, that are opened at the bottom surface of the valve body 18; a pilot ejection channel pe penetrates the valve body 18 in the direction in which valve bodies are connected; and an opening 29c that allows the pilot ejection channel pe to be opened on the top surface of the bottom cover. If through holes similar to the supply through hole 23 are formed for the ejection channels EA and EB, recesses (seal sections) that close the bottom ends of the through holes must be formed on the bottom cover 15. When a plurality of valve bodies 18 are connected, the pilot ejection channels pe are in communication with the supply, ejection, and pilot supply channels P, EA, EB, and ps in the same way that they are sealed.

A first piston 35a is inserted into a first piston chamber 34a formed in the second manual operation box 19B in an airtight and sliding manner, and a second piston 35b is inserted into a second piston chamber 34b formed on the end plate 20 in an airtight and sliding manner. When a pilot fluid is supplied from the first pilot output through hole 36b to the first piston chamber 34a, the first piston 35a and the valve member 26 move toward the right in Figure 1, the supply channel P communicates with the first output opening 25A, and the second output opening 25B communicates with the second ejection channel EB (see the lower half of the valve member 26 in Figure 1), thereby outputting pressurized fluid from the first output port A. In addition, when pilot fluid is supplied from the second pilot output through hole 37f to the second piston chamber 34b with pilot fluid ejected from the first piston chamber 34a, the second piston 35b and the valve member 26 move toward the left in Figure 1, the supply channel P communicates with the second output opening 25B, and the first output opening 25A communicates with the first ejection channel EA (see the upper half of the valve body 26 in Figure 1), thereby outputting pressurized fluid from the second output port B.

A first pilot solenoid valve 13A for driving the valve member 26 and a second pilot solenoid valve 13B for making the valve member 26 return are attached to the first manual operation box 19A with set screws 38 (see Figure 2) in such a way that the solenoid valves are vertically arranged.

Each of the pilot solenoid valves 13A and 13B includes a pilot inlet port, a pilot outlet port, and a pilot exhaust port, and each is configured as a well known, normally closed, three-port solenoid valve switches the pilot output port between the pilot inlet port and the pilot exhaust port for communication by energizing and de-energizing the solenoids 39a and 39b.

As shown in Figure 5, pilot fluid is supplied from the pilot supply channel ps through the pilot supply passage 40a formed in the valve body 18 and through the pilot supply passages 40b and 40c formed in the second and first manual operation box 19B and 19A to the pilot inlet ports of the pilot solenoid valves 13A and 13B. The pilot output port in the solenoid valve 13A is in communication with the first piston chamber 34a through first pilot output through holes 36a and 36b formed in the manual operation boxes 19A and 19B. In addition, the pilot output port in the solenoid valve 13B is opened to an output channel 37d between the top surface of the valve body 18 and the top cover 21 through second pilot output through holes 37a and 37b formed in the manual operation boxes 19A and 19B and through a pilot output through hole 37c in the valve body 18, and is in communication with the second piston chamber 34b through second pilot output through holes 37e and 37f formed in the valve body 18 and the end plate 20.

On the other hand, each of the pilot exhaust ports in the solenoid valves 13A and 13B is in communication with the pilot ejection channel pe at the bottom cover 15 through pilot exhaust passages 41a, 41b, and 41c formed in the manual operation boxes 19A and 19B and the valve body 18.

The pilot supply passage 40c and pilot exhaust passage 41a in the manual operation box 19A are both opened from the bottom surface of the manual operation box 19A, and the openings at the bottom surface of these passages are closed by plugs.

The pilot supply channel ps can be formed on the top cover 21 or the pilot ejection channel pe can be formed on the valve body 18.

The pilot solenoid valves 13A and 13B include an inlet valve body 42a and an exhaust valve body 42b positioned on either side of the first manual operation box 19A, and are interlocked. When the solenoid 39 a or 39b is energized, the inlet valve body 42a opens the pilot inlet port to allow the pilot supply passage 40c to communicate with the first or the second pilot output through hole 36a or 37a, and the exhaust valve body 42b closed the pilot exhaust port to block communication between the pilot output through hole 36a or 37a and the pilot exhaust passage 41a. When the solenoids 39a and 39b are de-energized, the exhaust valve body 42b opens the pilot exhaust port while the inlet valve body 42a closes the pilot inlet port.

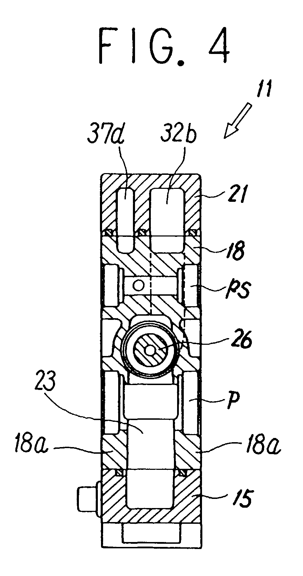

As shown in Figures 1, 2, and 4, the first output channel 32b and the second pilot output channel 37d are both opened on the top surface of the valve body 18, and these output channels consist of parallel grooves (see Figure 4) formed on the top surface of the valve body 18 and on the bottom surface of the cover 21, which are aligned in the direction in which valve bodies are connected. Thus, even if the valve body 18 includes supply and ejection channels P, EA, and EB that penetrate the valve body in the direction in which the valve bodies are connected, the channel extending from the output openings 25A and 25B for the valve hole 24 to the output ports A and B and the channel extending from the second pilot solenoid valve 13B to the second piston chamber 34b can be routed very easily, and channels with large cross sections can be provided while permitting a compact structure.

First and second manual operation buttons 43a and 43b are formed in the first and the second manual operation boxes 19A and 19B so that the buttons can be pressed downward. The manual operation buttons 43a and 43b are normally energized upward by springs 44a and 44b in such a way that the first manual operation button 43a is in a standby position while the second operation button 43b blocks communication between the pilot supply passage 40a and the pilot output through hole 37c, as shown in Figure 1.

If an accident, such as a service interruption, prevents the valve member 26 from being driven by the solenoids 39a and 39b and the first manual operation button 43a is pressed against the energizing force of the spring 44a, then the inlet valve body 42a of the pilot solenoid valve 13A is directly pressed to open the channel extending from the pilot supply passage 40c to the pilot output through holes 36a and 36b. In addition, when the second manual operation button 43b is pressed against the energizing force of the spring 44b, the pilot supply passage 40a can be allowed to communicate with the pilot output through hole 37c.

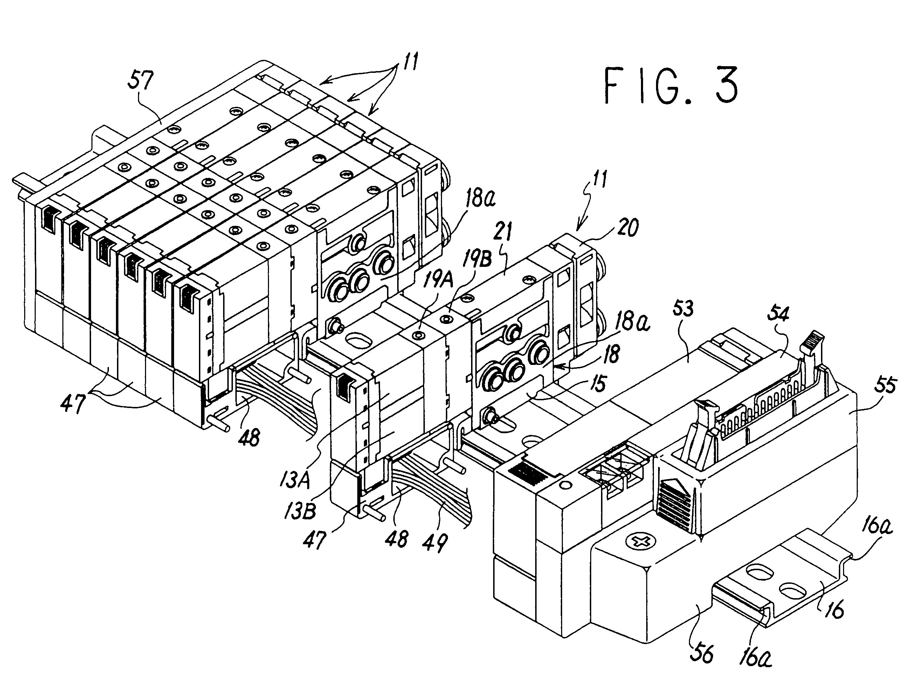

A feeding section 45 attached to a side of the pilot solenoid valves 13A and 13B has at its bottom end a receiving terminal 46, which is electrically connected to a feeding terminal (not shown) of a feeding line 49 introduced through a wiring passage 48 in a feeding box 47 (see Figure 3) attached to the bottom of the pilot valve 13B.

A penetrating passage 26a that penetrates the valve member 26 in its axial direction allows a breather chamber in the valve body partitioned by pistons 35a and 35b to communicate with the pilot exhaust passage 41b. In Figure 2, reference numeral 50 designates a gasket that seals the contacting surface of each member, 51 is a connecting member that is attached to the supply and the ejection channels P, EA, and EB of adjacent valve bodies 18, 18, and 51, 51a are seal members that are mounted on the outer circumference of the connecting member 51 to allow the channels to be in communication with each other in an airtight manner.

Furthermore, in Figure 3, 53 is a supply-and-exhaust block provided on one end of the selector valve in the direction in which valve bodies are connected; 54 is a feeding block; 56 is a mount on which a multipole connector 55 is mounted; 57 is a side plate that contacts with the other end of the selector valve in the direction in which valve bodies are connected. These components are all fixed to the rail 16 with set screws together with connected selector valves.

In the pilot selector valve according to the first embodiment, when the solenoid 39a of the first pilot solenoid valve 13A is energized, pilot fluid supplied to the first piston chamber 34a causes the valve member 26 to slide, thereby causing the supply channel P to communicate with the first output opening 25A, and outputting compressed air from the first output port A. In addition, when the solenoid 39a is de-energized and the solenoid 39b of the second pilot solenoid valve 13B is energized, the pilot fluid is ejected from the first piston chamber 34a, while pilot fluid supplied to the second piston chamber 34b causes the valve member 26 to slide in the opposite direction, thereby causing supply channel P to communicate with the second output opening 25B, and outputting compressed air from the second output port B.

In this case, the first output channel 32b and the second pilot output channel 37d must be formed in the axial direction of the valve body 18, but these channels are opened at the top surface of the valve body 18 to communicate with the channels in the end plate 20 using parallel grooves at the top surface of the valve body 18 and at the bottom surface of the top cover 21 that covers the valve body 18. Consequently, these channels, and in particular, channels that bypass the pilot supply channel ps can be routed easily, and the cross sections of the channels can be adjusted so as to ensure the required flow.

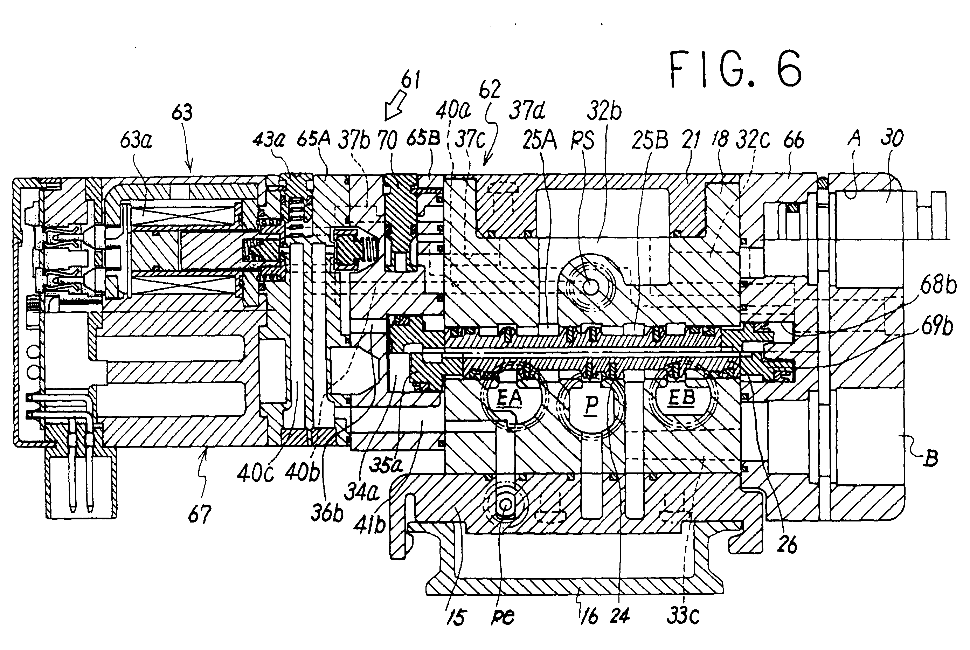

Figure 6 shows a second embodiment using as many of the same components used in selector valve 11 according to the first embodiment as possible. A selector valve 61 is configured as a single pilot selector valve, and includes a main valve 62 and a pilot solenoid valve 63 similar to those in the first embodiment, and can be connected to the rail 16 using the bottom cover 15.

The valve body 18 of the main valve 62 and the top cover 21 have the same configuration as in the first embodiment; therefore, the same main components in Figure 6 have the same reference numbers.

In addition, first and second operation boxes 65A and 65B are attached to one axial-end surface of the valve body 18, an end plate 66 is attached to the other end surface, and the top and the bottom covers 21 and 15 are attached to the top and the bottom surfaces of the valve body, respectively. A pilot solenoid valve 63 with the same configuration as the first pilot solenoid valve 13A according to the first embodiment and a dummy body 67 with the same appearance as the second pilot solenoid valve 13B are attached to the first manual operation box 65A.

The end plate 66 has the same configuration as the end plate 20 except that the former includes a second piston chamber 68b with a smaller diameter than the first piston chamber 34a and a second piston 69b with a smaller diameter than the first piston 35a.

In addition, the first manual operation box 65A has the same configuration as the first manual operation box 19A according to the first embodiment, except that it has no opening to the dummy body 67. The second manual operation box 65B has the same configuration as the second manual operation box 19B according to the first embodiment, except that it includes a communication member 70 to allow the pilot supply passage 40a to communicate normally with the second pilot output through hole 37c and to block communication between the second pilot output through holes 37b and 37c.

The other configuration of the second embodiment is the same as that of the first embodiment; therefore, the same main components in Figure 6 have the same reference numbers; therefore, their descriptions are omitted.

In the pilot selector valve according to the second embodiment, when the solenoid 63a of the pilot solenoid valve 63 is de-energized, pilot fluid constantly supplied from the pilot supply channel ps to the second piston chamber 68b causes the valve member 26 to move toward the left in the figure, thereby causing the supply channel P to communicate with the second output opening 25B and the first output opening 25A to communicate with the first ejection channel EA (see the upper half of the valve body 26), and outputting compressed air from the second output port B. When the solenoid 63a is energized, pilot fluid is supplied to the first piston chamber 34a and the valve member 26 moves toward the right in the figure due to the difference in diameter between the first and the second pistons 35a and 69b, thereby causing the supply channel P to communicate with the first output opening 25A and the second output opening 25B to communicate with the second ejection channel EB (see the lower half of the valve body 26), and outputting compressed air from the first output port A. The operation performed when the first manual operation button 43a is pressed is the same as that in the first embodiment. In addition, the other action of the second embodiment is the same as in the first embodiment; therefore, its description is omitted.

In the first and the second embodiments, since each component has the same appearance, the required modification made to certain components enables common components to be used in both embodiments, thereby providing an inexpensive pilot selector valve.

## Claims

1. A pilot selector valve (11, 61) comprising a main valve (12) having a valve body (18) and a valve member (26) inserted into a valve hole (24) in the valve body (18), the main valve (12) being connectable to other such main valves on a connecting surface (18a) parallel to the axis of the valve hole (24),and at least one pilot valve (13A, 13B) attached to one end of said valve body (18) in the direction in which the valve hole (24) extends, said main valve (12) permitting communication of a pressurized fluid supply and ejection openings opened to the valve hole (24) with supply (P) and ejection (EA, EB) channels that penetrate the valve body (18) in the direction in which valve bodies are connected together, and permitting communication of first (25A) and second (25B) output openings opened to the valve hole (24) with output ports (A,B) opened at the other end of the valve body (18) in the direction in which the valve hole (24) extends, so that pilot fluid output from said pilot valve (13A, 13B) can be used to drive the valve member (26) of the main valve (12) to switch said first (A) and the second (B) output ports between the supply (P) and the ejection (EA, EB) channels, characterised in that the first output opening (25A) in the valve body (18) on the pilot valve mounting side is opened relative to a first output channel (32b) formed on the top surface of the valve body (18) using a first enlarged channel (32a) with a square cross section and with its width in the axial direction of the valve hole (24) increased between sealants (27, 27) located on both sides of the output opening (25A), and in that a through hole (32c) for permitting communication of said first output channel (32b) with the first output port (A) is opened in the valve body (18) so that said first output channel (32b), which is formed by attaching a top cover (21) to the valve body (18), can allow communication of said first enlarged channel (32a) with said through hole (32c), and in that said second output opening (25B) located opposite the first output channel (32b) is opened relative to the bottom surface of the valve body (18) using a second enlarged channel (33a) similar to said first enlarged channel (32a), and in that a through hole (33c) for permitting communication of said second enlarged channel (33a) with a second output port (B) is opened in the valve body (18) with the open end of said second enlarged channel (33a) closed by a bottom cover (15) attached to the bottom surface of the valve body (18).

2. A pilot selector valve (11) as claimed in Claim 1 including a first pilot valve (13A) for driving the valve member (26) in one direction and a second pilot valve (13B) for returning the valve member (26).

3. A pilot selector valve (11) as claimed in Claim 2 wherein in the top surface of the valve body (18), a pilot output through hole (37c) for introduction of pilot fluid output from the second pilot valve (13B) is formed in the valve body (18) relative to a second pilot output channel (37d) formed in the top surface of the valve body (18) in parallel to the first output channel (32b) by attaching the top cover, and wherein a second pilot output through hole (37e, 37f) for permitting communication of said second pilot output channel (37d) with a piston chamber (34b) at the end of the valve body (18) located opposite the pilot valve mounting side of the valve body (18).

4. A pilot selector valve (11, 61) as claimed in any preceding claim wherein the first enlarged channel (32a) has a width orthogonal to the connection surface (18a) of the valve body (18) which is larger than its width in the axial direction, and wherein the second enlarged channel (33a) is formed relative to the bottom surface of the valve body (18) so that its width orthogonal to the connecting surface of the valve body (18) is larger than its width in the axial direction.

5. A pilot selector valve (11, 61) as claimed in any preceding claim wherein a pilot supply channel (P1) that penetrate the valve body (18) in the direction in which valve bodies are connected is formed in the valve body (18) to supply pilot fluid to the pilot valves (13A, 13B).

6. A pilot selector valve (11, 61) as claimed in any preceding claim wherein the bottom cover (15) includes an engagement section (28a,28b) that engages the valve body (18) with a rail (16) for connecting multiple valve bodies together.

## Patentansprüche

1. Vorgesteuertes Wahlventil (11,61) mit einem Hauptventil (12), das einen Ventilkörper (18) und ein in eine Ventilbohrung (24) im Ventilkörper (18) eingefügtes Ventilglied (26) aufweist, wobei das Hauptventil (12) mit anderen solchen Hauptventilen an einer zur Achse der Ventilbohrung (24) parallelen Verbindungsfläche (18a) verbindbar ist, und mindestens einem Vorsteuerventil (13A, 13B) , das an ein Ende des Ventilkörpers (18) in die Richtung angebracht ist, in der sich die Ventilbohrung (24) erstreckt, wobei das Hauptventil (12) eine Verbindung von Druckfluid-Zufuhr- und Ausstoßöffnungen, die zur Ventilbohrung (24) geöffnet sind, mit Zufuhr- (P) und Ausstoß- (EA,EB) Kanälen erlaubt, die den Ventilkörper (18) in die Richtung durchdringen, in der Ventilkörper miteinander verbunden sind, und eine Verbindung von ersten (25A) und zweiten (25B) Ausgangsöffnungen, die zur Ventilbohrung (24) geöffnet sind, mit Ausgangsanschlüssen (A,B) erlaubt, die am anderen Ende des Ventilkörpers (18) in die Richtung geöffnet sind, in der sich die Ventilbohrung (24) erstreckt, so daß eine Vorsteuerfluidabgabe aus dem Vorsteuerventil (13A, 13B) verwendet werden kann, um das Ventilglied (26) des Hauptventils (12) anzutreiben, um die ersten (A) und die zweiten (B) Ausgangsanschlüsse zwischen den Zufuhr- (P) und Ausstoß- (EA,EB) Kanälen umzuschalten, dadurch gekennzeichnet, daß die erste Ausgangsöffnung (25A) im Ventilkörper (18) an der Vorsteuerventil-Befestigungsseite relativ zu einem ersten Ausgangskanal (32b) geöffnet ist, der auf der Oberseite des Ventilkörpers (18) ausgebildet ist, wobei ein erster erweiterter Kanal (32a) verwendet wird, wobei ein quadratischer Querschnitt und seine Breite in die axiale Richtung der Ventilbohrung (24) zwischen Dichtungsmassen (27,27) erhöht ist, die auf beiden Seiten der Ausgangsöffnung (25A) angeordnet sind, und daß ein Durchgangsloch (32c), um eine Verbindung des ersten Ausgangskanals (32b) mit dem ersten Ausgangsanschluß (A) zu erlauben, im Ventilkörper (18) geöffnet ist, so daß der erste Ausgangskanal (32b), der durch Anbringen einer oberen Abdeckung (21) auf dem Ventilkörper (18) gebildet wird, eine Verbindung des ersten erweiterten Kanals (32a) mit dem Durchgangsloch (32c) erlauben kann, und daß die zweite Ausgangsöffnung (25B), die gegenüber dem ersten Ausgangskanal (32b) angeordnet ist, relativ zur Bodenfläche des Ventilkörper (18) geöffnet ist, wobei ein zweiter erweiterter Kanal (33a) verwendet wird, der zum ersten erweiterten Kanal (32a) ähnlich ist, und daß ein Durchgangsloch (33c), um eine Verbindung des zweiten erweiterten Kanals (33a) mit einem zweiten Ausgangsanschluß (B) zu erlauben, im Ventilkörper (18) geöffnet ist, wobei das offene Ende des zweiten erweiterten Kanals (33a) durch eine untere Abdeckung (15) verschlossen ist, die an der Bodenfläche des Ventilkörpers (18) angebracht ist.

2. Vorgesteuertes Wahlventil (11) nach Anspruch 1, das ein erstes Vorsteuerventil (13A) zum Antreiben des Ventilgliedes (26) in eine Richtung und ein zweites Vorsteuerventil (13B) zum Zurückholen des Ventilgliedes (26) aufweist.

3. Vorgesteuertes Wahlventil (11) nach Anspruch 2, wobei in der Oberseite des Ventilkörpers (18), ein Vorsteuerausgangs-Durchgangsloch (37c) zur Einleitung einer Vorsteuerfluidabgabe aus dem zweiten Vorsteuerventil (13B) im Ventilkörper (18) relativ zu einem zweiten Vorsteuerausgangskanal (37d) ausgebildet ist, der in der Oberseite des Ventilkörpers (18) parallel zum ersten Ausgangskanal (32b) durch Anbringen der oberen Abdeckung ausgebildet ist, und wobei ein zweites Vorsteuerausgangs-Durchgangsloch (37e, 37f) geöffnet ist, um eine Verbindung des zweiten Vorsteuerausgangskanals (37d) mit einer Kolbenkammer (34b) am Ende des Ventilkörpers (18) zu erlauben, die gegenüber der Vorsteuerventil-Befestigungsseite des Ventilkörpers (18) angeordnet ist.

4. Vorgesteuertes Wahlventil (11,61) nach einem der vorhergehenden Ansprüche, wobei der erste erweiterte Kanal (32a) eine zur Verbindungsfläche (18a) des Ventilkörpers (18) orthogonale Breite aufweist, die größer als seine Breite in die axiale Richtung ist, und wobei der zweite erweiterte Kanal (33a) relativ zur Bodenfläche des Ventilkörpers (18) ausgebildet ist, so daß seine zur Verbindungsfläche des Ventilkörpers (18) orthogonale Breite größer als seine Breite in die axiale Richtung ist.

5. Vorgesteuertes Wahlventil (11,61) nach einem der vorhergehenden Ansprüche, wobei ein Vorsteuerzufuhrkanal (Ps), der den Ventilkörper (18) in die Richtung durchdringt, in die Ventilkörper verbunden sind, im Ventilkörper (18) ausgebildet ist, um den Vorsteuerventilen (13A, 13B) ein Vorsteuerfluid zuzuführen.

6. Vorgesteuertes Wahlventil 11,61) nach einem der vorhergehenden Ansprüche, wobei die untere Abdeckung (15) einen Eingriffsabschnitt (28a, 28b) aufweist, der den Ventilkörper (18) mit einer Schiene (16) in Eingriff bringt, um mehrere Ventilkörpern miteinander zu verbinden.

## Revendications

1. Soupape de sélection à pilote (11, 61) comprenant une soupape principale (12) qui possède un corps de soupape (18) et un élément de soupape (26) inséré dans un alésage de soupape (24) prévu dans le corps de soupape (18), la soupape principale (12) pouvant être reliée à d'autres soupapes principales du même genre par une surface de liaison (18a) parallèle à l'axe de l'alésage de soupape (24), et au moins une soupape pilote (13A, 13B) fixée à une extrémité dudit corps de soupape (18) dans la direction dans laquelle l'alésage de soupape (24) s'étend, ladite soupape principale (12) permettant une mise en communication d'une source de fluide sous pression et d' ouvertures d'éjection de fluide qui s'ouvrent dans l'alésage de soupape (24) avec des canaux d'arrivée (P) et d'éjection (EA, EB) qui cheminent dans le corps de soupape (18) dans la direction dans laquelle les corps de soupape sont reliés entre eux, et permettant une mise en communication de première (25A) et deuxième (25B) ouvertures de sortie qui s'ouvrent dans l'alésage de soupape (24) avec des orifices de sortie (A, B) qui s'ouvrent à l'autre extrémité du corps de soupape (18) dans la direction dans laquelle l'alésage de soupape (24) s'étend, de sorte que la sortie de fluide pilote arrivant de ladite soupape pilote (13A, 13B) peut être utilisée pour commander l'élément de soupape (26) de la soupape principale (12) pour commuter lesdits premier (A) et deuxième (B) orifices de sortie entre les canaux d'arrivée (P) et d'éjection (EA, EB), caractérisée en ce que la première ouverture de sortie (25A) formée dans le corps de soupape (18) sur le côté de montage de la soupape pilote, communique avec un premier canal de sortie (32b) formé sur la surface supérieure du corps de soupape (18) au moyen d'un premier canal élargi (32a) possédant une section transversale carrée et ayant sa largeur mesurée dans la direction axiale de l'alésage de soupape (24) augmentée entre des surfaces de fermeture (27, 27) placées sur les deux côtés de l'ouverture de sortie (25A), et en ce qu'un perçage traversant (32c) destiné à permettre la communication entre ledit premier canal de sortie (32b) et le premier orifice de sortie (A) est percé dans le corps de soupape (18), de sorte que ledit premier canal de sortie (32B), qui est formé en fixant un couvercle supérieur (21) au corps de soupape (18) peut permettre la communication entre ledit premier canal élargi (32a) et ledit perçage traversant (32c), et en ce que ladite deuxième ouverture de sortie (25B) placée à l'opposé dudit premier canal de sortie (32b) communique avec la surface inférieure du corps de soupape (18) au moyen d'un deuxième canal élargi (33a) analogue audit premier canal élargi (32a), et en ce qu'un perçage traversant (33c) destiné à permettre une communication entre ledit deuxième canal élargi (33a) et un deuxième orifice de sortie (B) est percé dans le corps de soupape (18), l'extrémité ouverte dudit deuxième canal élargi (33a) étant fermée par un couvercle inférieur (15) fixé à la surface inférieure dudit corps de soupape (18).

2. Soupape de sélection à pilote (11) selon la revendication 1, comprenant une première soupape pilote (13A) destinée à commander l'élément de soupape (26) dans une direction et une deuxième soupape pilote (13B) destinée à rappeler l'élément de soupape (26).

3. Soupape de sélection à pilote (11) selon la revendication 2, dans laquelle, dans la surface supérieure du corps de soupape (18), un perçage traversant (37c) de sortie pilote destiné à l'introduction de fluide pilote arrivant de la deuxième soupape pilote (13B) est formé dans le corps de soupape (18) et débouche dans un deuxième canal de sortie pilote (37d) formé dans la surface supérieure du corps de soupape (18), en parallèle avec le premier canal de sortie (32b) en fixant le couvercle supérieur, et dans laquelle un deuxième perçage traversant de sortie pilote (37e, 37f) destiné à permettre une communication entre ledit deuxième canal de sortie pilote (37d) et une chambre de piston (34b) située à l'extrémité du corps de soupape (18) placée à l'opposé du côté du corps de soupape (18) pour le montage de la soupape pilote.

4. Soupape de sélection à pilote (11, 61) selon une quelconque des revendications précédentes, dans laquelle le premier canal élargi (32a) possède une largeur orthogonale à la surface de liaison (18a) du corps de soupape (18), qui est plus grande que sa largeur mesurée dans la direction axiale, et dans laquelle le deuxième canal élargi (33a) est formé en débouchant sur la surface inférieure du corps de soupape (18), de telle manière que sa largeur orthogonale à la surface de liaison du corps de soupape (18), est plus grande que sa largeur dans la direction axiale.

5. Soupape de sélection à pilote (11, 61) selon une quelconque des revendications précédentes, dans laquelle un canal d'arrivée pilote (Ps) qui chemine dans le corps de soupape (18) dans la direction dans laquelle les corps de soupapes sont reliés est formé dans le corps de soupape (18) pour envoyer le fluide pilote aux soupapes pilotes (13A, 13B).

6. Soupape de sélection à pilote (11, 61) selon une quelconque des revendications précédentes, dans lequel le couvercle inférieur (15) comprend une section de prise (28a, 28b) qui met le corps de soupape (18) en prise avec un rail (16) destiné à relier entre eux des corps de soupapes multiples.
